(19) **Europäisches Patentamt European Patent Office Office européen des brevets**

(11) **EP 4 764 967 A1**

(12) **EUROPEAN PATENT APPLICATION**

(43) Date of publication:
24.06.2026 Bulletin 2026/26

(21) Application number: 24307261.8

(22) Date of filing: **20.12.2024**

(51) International Patent Classification (IPC):
*G06N 10/20* (2022.01)     *G06N 10/70* (2022.01)

(52) Cooperative Patent Classification (CPC):
**G06N 10/20; G06N 10/70;** G06N 10/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventors:
• **ROUSSEAU, Rémi**
**75015 Paris (FR)**
• **JEZOUIN, Sébastien**
**75015 Paris (FR)**
• **BEUGNOT, Gaspard**
**75015 Paris (FR)**

(74) Representative: **Atout PI Laplace**
**Immeuble Up On**
**25 Boulevard Romain Rolland**
**CS 40072**
**75685 Paris Cedex 14 (FR)**

(54) **METHOD FOR DETERMINING A CHARACTERISTIC BIT-FLIP TIME OF A QUANTUM QUBIT IN A SUPERCONDUCTING QUANTUM CIRCUIT**

(57)     A method for determining a characteristic bit-flip time of a quantum qubit in a superconducting quantum device, comprises the following operations:

a) initializing an idling time and a probability density function (P) of bit-flip time testing parameters ($\theta$) according to a first probability distribution (p), said bit-flip testing time parameters ($\theta$) comprising at least a decreasing lifetime rate ($\Gamma_Z$) said probability density function (P) of bit-flip time testing parameters ($\theta$) being a Poisson distribution with the probability of observing a total measurement outcome $y = \Sigma_i\, y_i$ being given by $P(y = k \mid$

$$\theta, t, 0/1) = \binom{N}{k} p_{0/1}^{k} \left( 1 - p_{0/1} \right)^{N-k}, \text{ where}$$

$p_{0/1}$ is a function comprising a component of the type $e^{-\Gamma_Z t}$, said probability density function of bit-flip time testing parameters ($\theta$) being stored on a grid of values for the bit-flip time testing parameters ($\theta$),

b) preparing a physical qubit in a chosen state,
c) idling for a duration derived from the idling time,
d) obtaining a bit-flip measurement (y) by reading the state of the physical qubit,
e) updating the probability distribution function of bit-flip time testing parameters ($p(\theta)$) using the measurement (y)

of operation d), the idling time of operation c), and with the formula $p(\theta) = p(\theta)p(y|\theta, t)/p(y, t)$,

f) calculating an estimated information gain for each possible measurement time using the updated probability distribution function of bit-flip time testing parameters ($p(\theta)$) of operation e), from the information gain equal to the difference between the Shannon entropy of the probability distribution function of the decreasing lifetime rate ($p(\Gamma_Z)$) and the Shannon entropy of the conditional probability distribution function of the decreasing lifetime rate knowing the measurement of operation d) and the idling time ($p(\Gamma_Z|(y, t)$), or an estimated information flow with the information flow which is a function of the information gain and the idling time,

g) defining a new idling time as the value of time which maximizes the estimated information gain or the estimated information flow of operation f),

h) Returning the bit-flip testing time parameters ($\theta$) if $p(\theta)$ satisfies a return condition derived from the evolution of the decreasing lifetime rate ($\Gamma_Z$), and/or comparison with a return threshold, and else repeating steps b) to g) with the idling time of operation g) and the probability distribution function (p) of bit-flip time testing parameters ($\theta$) of operation e).

EP 4 764 967 A1

FIG. 2

**Description**

The invention concerns a method for determining a characteristic bit-flip time of a quantum qubit in a superconducting quantum circuit.

Quantum computers are beginning to emerge as a market and are no longer considered to belong to the realm of scientific exploration. This has notably been achieved thanks to stabilization methods which allow physical quantum qubits to last evermore. In the domain of cat qubits, the typical bit-flip time can be up to several hundreds of seconds.

This means that properly estimating the characteristic bit-flip time of quantum qubit in a superconducting quantum circuit becomes more and more challenging, as the measure time will tend to last longer and longer.

As progresses are made with other aspects of physical qubits, it is no longer acceptable to perform conventional sampling explorations schemes of quantum parameters to characterize physical qubit parameters.

In view of this, methods have been developed to determine parameter estimations of physical qubits. For instance, the article by Guilmin, Pierre, Pierre Rouchon, and Antoine Tilloy. "Parameters estimation by fitting correlation functions of continuous quantum measurement" arXiv preprint arXiv:2410.11955 (2024) generally discloses a method for parameter estimation by fitting correlation functions of continuous quantum measurements. In this article, system parameters are determined by maximizing the likelihood of the observed data. However, since this method relies on a physical model of the experiment, it requires strong assumptions about the underlying physical phenomena.

A generalist method is disclosed in the article by Rainforth, Tom, et al. "Modern Bayesian experimental design", Statistical Science 39.1 (2024) : 100-114. However, this article is highly generic with a broad scope, making it unclear whether and how it could be adapted to the specific context of physical qubits. Additionally, it lacks crucial details necessary for applications like measuring lifetimes.

The invention aims at improving the situation. To this end, the Applicant proposes a method for determining a characteristic bit-flip time of a quantum qubit in a superconducting quantum device, comprising the following operations:

a) initializing an idling time and a probability density function of bit-flip time testing parameters ($\theta$) according to a first probability distribution, said bit-flip testing time parameters comprising at least a decreasing lifetime rate said probability density function of bit-flip time testing parameters being a Poisson distribution with the probability of observing a total measurement outcome $y = \Sigma_i\, y_i$ being given by $P(y = k \mid \theta, t, 0/1) =$

$$\binom{N}{k} p_{0/1}^k \left( 1 - p_{0/1} \right)^{N-k}$$, where $p_{0/1}$ is a function comprising a component of the type $e^{-\Gamma Zt}$, said probability density function of bit-flip time testing parameters being stored on a grid of values for the bit-flip time testing parameters,

b) preparing a physical qubit in a chosen state,

c) idling for a duration derived from the idling time,

d) obtaining a bit-flip measurement by reading the state of the physical qubit,

e) updating the probability distribution function of bit-flip time testing parameters using the measurement of operation d), the idling time of operation c), and with the formula $p(\theta) = p(\theta)p(y|\theta,t)/p(y,t)$,

f) calculating an estimated information gain for each possible measurement time using the updated probability distribution function of bit-flip time testing parameters of operation e), from the information gain equal to the difference between the Shannon entropy of the probability distribution function of the decreasing lifetime rate and the Shannon entropy of the conditional probability distribution function of the decreasing lifetime rate knowing the measurement of operation d) and the idling time, or an estimated information flow with the information flow which is a function of the information gain and the idling time,

g) defining a new idling time as the value of time which maximizes the estimated information gain or the estimated information flow of operation f),

h) Returning the bit-flip testing time parameters if $p(\theta)$ satisfies a return condition derived from the evolution of the decreasing lifetime rate, and/or comparison with a return threshold, and else repeating steps b) to g) with the idling time of operation g) and the probability distribution function of bit-flip time testing parameters of operation e).

This method is advantageous because it allows to significantly optimize the time needed to determine the bit-flip time of a given quantum qubit implemented on a superconducting quantum circuit.

In various embodiments, the method may present one or more of the following features:

- said $p_{0/1}$ function is defined as $p_{0/1} = (1 + C_{end} + (C_{end} \pm C_0)e^{-\Gamma Zt})/2$, with the "$\pm$" varying depending on the chosen state of operation b) and on the measurement carried out in operation d), and with $C_0$ being an initial contrast parameter and $C_{end}$ being a final contrast parameter which are both part of the bit-flip time testing parameters ($\theta$),
- the information flow is calculated as the ratio of the information gain and a non-decreasing function of time,
- the variable $i$ is comprised between [2;N], with N being greater than 2, and in which for each idling time, operations b) to d) are repeated a number N of times to obtain the bit-flip measurement.
- operation a) comprises repeating operations b) to d) with an idling time equal to a minimum idling time, and
- the final contrast ($C_{end}$) is set to 0.

The invention further concerns a system for determining a characteristic bit-flip time of a quantum qubit in a superconducting quantum device, comprising a housing portion arranged to receive a superconducting quantum device, and a processing element arranged to perform the method according to the invention on a superconducting quantum device received in said housing portion.

The invention further concerns a computer program product comprising instructions which cause the system above to carry out the operations of the method according to the invention.

Other features and advantages of the invention will readily appear in the following description of the drawings, which show exemplary embodiments of the invention and on which:

- Figure 1 represents a lumped element equivalent of the superconducting quantum circuit 2 which was used to validate the method according to the invention,
- Figure 2 represents a general diagram of a method for determining characteristic bit-flip time of a quantum qubit in a superconducting quantum circuit according to the invention,
- Figure 3 shows a plot of the expected information flow (EIF) for the $\Gamma_Z$ distribution versus the measurement time $t$, and
- Figure 4 shows a generic diagram of a system for carrying out the method according to the invention.

The drawings and the following description are comprised for the most part of positive and well-defined features. As a result, they are not only useful in understanding the invention, but they can also be used to contribute to its definition, should the need arise.

The description may refer or use elements protected or protectable by copyright. The Applicant does not object to the reproduction of those elements in as much as it is limited to the necessary legal publications, however this should not be construed as a waiver of rights or any form of license.

The Applicant has looked for various methods to improve the time spent to achieve faster times to establish the characteristic bit-flip time of its cat qubits implementations. In doing so they discovered a method which applies not only to cat qubits, but also generally to most superconducting qubits.

The method relies on an implementation of an adaptive Bayesian experiment design solution to iteratively select the measures to assess the bit-flip time, using Bayesian inference. In the following the method will be described with respect to a cat qubit implementation, and more precisely to a moon cat implementation. For precision's sake, the moon cat qubit is a specific squeezing cat qubit regime discovered by the Applicant, and disclosed in application EP23175147.0. However, the man skilled in the art will understand that this method can be used with any other qubit whose bitflip measure time is of the order of a few seconds. This can encompass all kinds of qubits, whether superconducting (Kerr cat qubit, GKP qubit, transmon, etc.) or not (ion traps, spins, cold atoms, etc.).

The following is a summary of cat qubits developed by the Applicant and their variety.

A. Biased-noise qubits

Stabilized cat qubits are known to benefit from a noise bias. More precisely, an effective error channel (e.g., bit errors or "bit flips") is suppressed in an exponential way with the "size" - i.e., the average number of photons - of the Schrödinger cat states of the cat qubits. Other qubits are known to benefit from a noise bias, such as two-photon exchange qubits (as disclosed by Pop et al. "Coherent suppression of electromagnetic dissipation due to superconducting quasiparticles", Nature 508, 369-372, 2014, doi 10.1038/nature13017). In the following, cat qubits will be the main example discussed, but it should be kept in mind that the method applies to any biased-noise qubit having a dissipative stabilization scheme.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states. Because of this noise structure, it is considered that the use of a single repetition code is sufficient to correct the remaining error channel. Indeed, if one wishes to correct only the phase jump, it is sufficient to just use a phase jump error correction code. This can be, for example a repetition code defined in the dual base, or any other classical error correction code.

The field of quantum computing is quite young. This is even more true in the case of the cat qubit domain. In many ways, it behaves like a research domain. As a result, the preferred way of progress is to make changes which may appear very incremental at first sight, but which in fact require significant physics works to be validated and industrialized. In other words, whatever is considered to be the current state of the art is generally left unchanged until a significant roadblock is discovered. This means that known to work solutions are not easily replaced.

B. Cat qubits

Part of the Applicant's research in the past years has concerned with the stabilization of cat qubits. In *"Exponential suppression of bit-flips in a qubit encoded in an oscillator"*, Nature Physics, 2020, R. Lescanne *et al.* demonstrated that cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

C. Stabilization schemes

Cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, *a* is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction, an ATS or a DC bias coupled to Josephson junctions - to the cat qubit mode a and by engineering the Hamiltonian $H/\hbar = g_2(a^2 - \alpha^2)b^\dagger + \text{h. c.}$, where *b* is the photon annihilation operator of the buffer mode b and $g_2$ is the two-photon coupling rate, by applying to the four-wave mixing device a pump at frequency | $2f_a$ - $f_b$| and a drive of the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where *K* is the amplitude of the Kerr Hamiltonian, *a* is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where *K* is the amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + \text{h. c}$, where $g_2$ is the complex two-photon coupling rate, *a* is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left((\cosh(r)a + \sinh(r)e^{i\theta}a^\dagger)^2 - \alpha^2\right)$, where $\kappa_{SC}$ is the squeezed two-photon dissipation rate, *a* is the photon annihilation operator, $\alpha$ is a complex number defining the cat qubit, *r* and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian

$$H/_\hbar = g_{SC}\left(\left(\cosh(r)a + \sinh(r)e^{i\theta}a^\dagger\right)^2 - \alpha^2\right)b^\dagger + \text{h.c.}$$ , where $b$ is the photon annihilation operator of mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

f) a variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $$H/_\hbar = g_2(a^2 + \lambda a^\dagger a - \alpha^2)b^\dagger + \text{h.c.}$$ ,

where $g_2$ is the amplitude of a pump at frequency $|2f_a - f_b|$, $a$ is the annihilation operator of the cat qubit mode a, $\lambda$, is a complex number which phase and amplitude result from the amplitude of longitudinal coupling produced by a pump at frequency $f_b$, $\alpha$ is a complex number resulting from a drive of the buffer mode b at frequency $f_b$ and b is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

g) a resonant dissipative stabilization, with jump operator $$L_2 = \sqrt{\kappa_2}(a^2 - \alpha^2)$$ , where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $$H/_\hbar = g_2(a^2 - \alpha^2)b^\dagger + \text{h.c.}$$ , where $b$ is the photon annihilation operator of the buffer mode b provided the mode frequencies verify substantially $2f_a = f_b$ and $g_2 < \kappa_b$ to which a drive of the buffer mode at frequency $f_b$ is added.

As mentioned above, the Applicant first applied the method described herein to determine the characteristic bit-flip time of a moon cat qubit, that is a cat qubit using the stabilization scheme f) above.

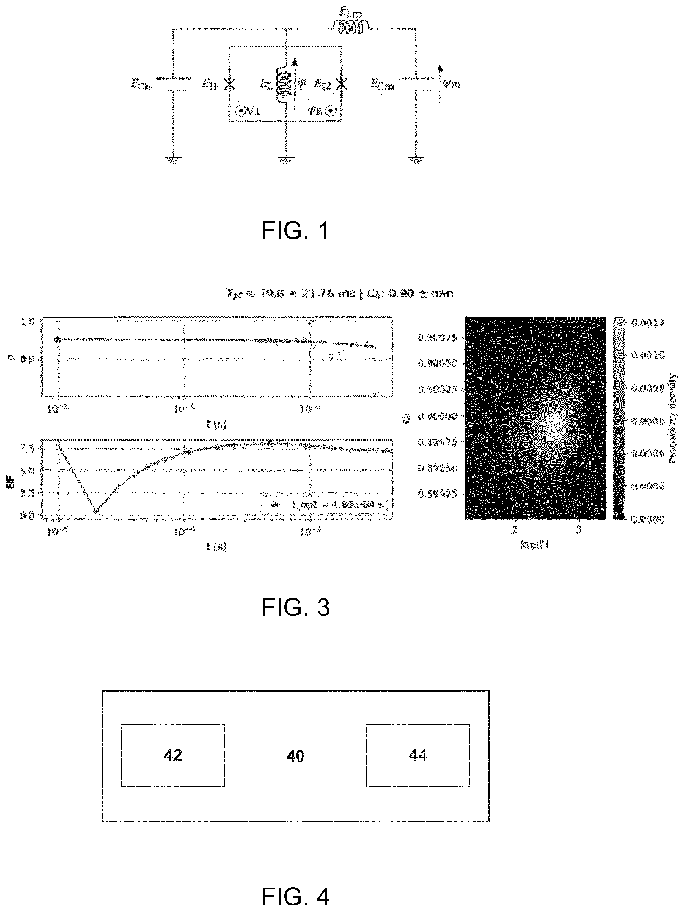

Figure 1 shows a lumped element equivalent of the superconducting quantum circuit 2 which was used to validate the method described below. The circuit 2 comprises a buffer 4 capacitance with an energy $Ec_b$, a memory 6 capacitance with an energy $Ec_m$ and a superconducting phase difference $\varphi i_m$. The memory 6 is connected to an asymmetric threaded squid (or "ATS", see for example the article by Lescanne et. Al "Exponential suppression of bit-flips in a qubit encoded in an oscillator", arXiv:1907.11729v1 [quant-ph] 26 Jul 2019) 8 through a chain of Josephson junction 10 which is modeled as a linear inductance $E_{Lm}$. The buffer 4 is shunted to ground by the ATS 8. The ATS 8 comprises a central chain of Josephson junction 12 which is modeled a linear inductance with energy $E_L$ and a phase difference $\varphi$. The inductance 12 is flanked by two Josephson junctions 14 and 16 with energy $E_{J1}$ and $E_{J2}$ which form two loops threaded by external magnetic fluxes $\varphi\_L$ and $\varphi\_R$.

The below table shows the superconducting quantum circuit 2 parameters and mode parameters at the experiment working point.

| $E_{Cm}/h$ | 9.6 MHz | $E_{Cb}/h$ | 110 MHz |
|---|---|---|---|
| $E_{Lm}/h$ | 35.3 GHz | $E_L/h$ | 33.0 GHz |
| $E_J/h$ | 18.1 GHz | $\Delta E_{J1/J2}/E_{JJ1/J2}$ | -2.95% |
| $\omega_m/2\pi$ | 1.08 GHz | $\omega_b/2\pi$ | 7.90 GHz |
| $\kappa_m/2\pi$ | 2.3 kHz | $\kappa_b/2\pi$ | 18.2 MHz |
| $\varphi_m$ | 0.098 | $\varphi_b$ | 0.234 |

In this experiment, the size of the stabilized coherent states $\alpha^2 = \xi_d/g_2^*$ was selected as 3.5 photons.

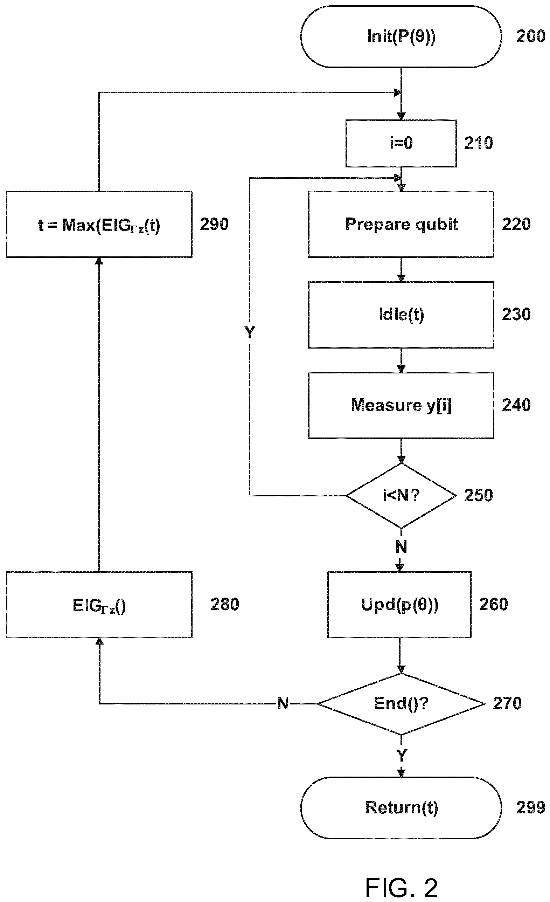

Figure 2 shows a general diagram of a method according to the invention, used with the circuit of Figure 1.

The main driver in this method is to use Bayesian inference to iteratively select measurement times in order to determine the bit-flip time.

The general idea of adaptive Bayesian experiment design is to start from a prior distribution of the parameters to be estimated. Herein, a uniform distribution in log scale (reciprocal distribution) is used for the bit-flip lifetime, and a uniform distribution for the initial contrast ($C_0$) and final contrast ($C_\infty$) where applicable. After each measurement the prior distribution is updated using the knowledge extracted by the measurement results. Then, the estimated information gain (EIG) is used to select the next measurement time. As the goal is to minimize the total measurement time, the next measurement time is chosen as the time maximizing the EIG. In a preferred embodiment, the next measurement time is chosen as the time maximizing the EIG per second of measurement. Moreover, since the focus is mainly on measuring the bit-flip lifetime, a lot of attention is spent on looking at the EIG on the distribution of lifetimes.

In the application to the moon cat quit, the measurement of the bit-flip rate $\Gamma_z$ follows a three steps procedure corresponding to preparation, idling and projective measurement. First, a resonant drive displaces the memory to either $|0\rangle_L = |\alpha\rangle$ or $|1\rangle_L = |-\alpha\rangle$ while the moon cat qubit stabilization is off. The latter is then turned on for a variable idling duration t (referred to below as measurement time $t$), stabilizing the state hosted in the memory to the cat manifold. During this step, bit-flips may occur with a probability that depends on the average photon number $\bar{n}$ (and on the squeezing parameter $\lambda$, in the context of the moon cat qubit). Finally, to measure the projection along the Z-axis, the stabilization is switched off, a counter-displacement $\mathcal{D}(\mp\alpha)$ is applied to the memory. A photon number measurement follows, yielding 0 if no bit-flip occurred, and $4|\alpha|^2$ otherwise.

As discussed below, averaging the resulting dynamics and considering the difference between the signals corresponding to $|0\rangle_L$ and $|1\rangle_L$ yields an exponentially decaying function $\langle Z\rangle(t)$ with characteristic bit-flip rate $\Gamma_z$ or bit-flip time $T_z = 1/\Gamma_z$.

The dynamics of the resulting bit-flip experiment are modelled by an exponentially decaying function: $\langle Z\rangle t = C_\infty + (C_0 - C_\infty)\exp(-\Gamma_z t)$ where, in the case of a bit-flip measurement, the parameters to be estimated are $\theta = \{\Gamma_z, C_0, C_{end}\}$. These parameters respectively represent the decay rate $\Gamma_z$ of $\langle Z\rangle$, the initial contrast $C_0$ and final contrast $C_{end}$. In various embodiments, the final contrast may be set to a fixed value and not measured by the method. For example, the final contrast may be included in the model when a bit-flip measurement is performed during a Zeno gate. However, measuring an idle bit-flip, there is no reason for the final contrast to be different from 0. When measuring the bit-flip during a gate that directly plays a pulse at the memory frequency (Zeno, CNOT, ...), an incorrect calibration of the phase of the gate could result in a non-zero final contrast.

Each loop of the method involves selecting a measurement time $t$, preparing the initial state $|0\rangle_L$ or $|1\rangle_L$, and measuring $Z$, with the procedure repeated $N$ times for each state. A measurement of $Z$ may comprise the measurement of the parity at the center of the blobs (transmon), or the measurement of the mean photon number of the displaced cats by $+/-\alpha$ (longitudinal). Every measurement yields a result $y_i \in \{0,1\}$, where 1 corresponds to the state being measured in $|0\rangle_L$ and 0 corresponds to $|1\rangle_L$. The $N$ measurements of $Z$ for a given measurement $t$ are used to calculate $\langle Z\rangle_t$ which is simply the average of the $N$ measurements.

The decay rate of $\langle Z\rangle$, $\Gamma_z$ (also called bit-flip rate), as well as $C_0$ and $C_{end}$ are then extracted by fitting the experimental data to the afore mentioned model $\langle Z\rangle_t = C_{end} + (C_0 - C_{end})\exp(-\Gamma_z t)$.

In order to apply Bayesian adaptative design to this context, the first step is to model the above using a Poisson distribution. The probability of observing a total measurement outcome $y = \Sigma_i y_i$ is given by the formula A below:

$$p(y = k \mid \theta, t, 0/1) = \binom{N}{k} p_{0/1}^k \left(1 - p_{0/1}\right)^{N-k}$$

where $p_{0/1} = (1 + C_{end} + (C_{end} \pm C_0)e^{-\Gamma z t})/2$ with testing time parameters $\theta$ comprising a decreasing lifetime rate $\Gamma_z$, the initial contrast $C_0$, and the final contrast $C_{end}$. The "0/1" parameters changes the "$\pm$" in the $p_{0/1}$ equation: it is "+" if the displacement is $|0\rangle_L$ and the displacement measurement is $-\alpha$ or if the displacement is $|1\rangle_L$ and the displacement measurement is $+\alpha$, and "-" else.

Consequently, in a first operation 200, the method starts with the initialization of the probability density function grid. This may be for instance done by defining ranges for each of the testing time parameters $\theta$, and by applying for each cell in the grid the above formula for a range of measurement times t.

The first idling time (or measurement time) is preferably chosen close to 0, but above a threshold. Indeed, it should be higher than the typical times of the circuit. Also, if chose too low, it may define an initial contrast value $C_0$ which may be erroneous in the case that the qubit does not behave like modelled above.

Once the initialization step 200 is finished, the method enters a series of loops. With each loop, an index i is first set to 0 in an operation 210, and a series of measurements is performed N times. As described above, these measurements comprise a preparation of the qubit, with the cat qubit being prepared to either $|0\rangle_L = |\alpha\rangle$ or $|1\rangle_L = |-\alpha\rangle$ in an operation 220, an idling operation 230 during which the cat qubit stabilization is turned on for the idling time t, whereby the state hosted in the memory is stabilized to the cat manifold. This is the period during which a bit-flip may occur, and which we are trying to determine as being characteristic of the cat qubit under test. Finally, the stabilization is switched off, and the number of photons on Z is measured, thereby informing is a bit-flip has occurred or not in an operation 240. All measurements with $p_{0/1}$ having a "+" sign are summed in a first component, and all measurements with $p_{0/1}$ having a "-" sign are summed in a second component. Of course, if all measurements have the same sign in $p_{0/1}$, then $y$ is a scalar equal to the sum of all measurements.

Finally, a test in an operation 250 checks whether all N measurements have been performed. If it is not the case, then operations 220 to 240 are repeated. In the example shown here, the number of measurements N is the same for all of the loops, and is preferably set to 4.

In the case of cat qubits, it allows to tests by preparing two times with $|0\rangle_L = |\alpha\rangle$ and two times $|1\rangle_L = |-\alpha\rangle$, and performing in each case two different types of measures. This allows to take into account all possible combinations of preparation and measurement, and thus smooths the potential skew induced by each different combination. Alternatively, N may be small than 4, for example equal to 2. Still alternatively, N may vary depending on the measurement time. Indeed, for small measurement times, the measurement can be averaged over several hundreds of measurements, since the measurement time is by far the most time consuming portion of the physical experiment in each loop.

Once all the measurements have been performed for a given loop, the Bayesian adaptative design part takes place. As will appear in more details below, this is done by performing a Bayesian update on the current model and thereafter exploring this updated model to determine which is the most favorable idling time t to explore for the next loop in view of the current measurement $y$.

In order to perform these two steps, two separate grids are used: a theta grid for the $\theta$ parameters, and a measurement grid for determining the next idling time following the Bayesian update.

In the theta grid, the parameters of $\theta$ are sampled as values for the independent dimensions. This grid is initialized during operation 200, with each combination of the independent dimensions defining an intersection filled using a uniform distribution.

In the measurement grid, the $y$ values are sampled as defined by the number N, with a separate dimension for each $y$ component, and the idling time $t$ is also sampled in a separate dimension. In this grid, each combination of the separate dimensions defines an intersection which is used to determine the most favorable idling time for the next measurement.

This is performed by first performing the Bayesian update in an operation 260. In this operation, a function Upd() resets each intersection of the theta grid $p(\theta)$ with the value $p(\theta \mid y, t) = \dfrac{p(\theta)p(y|\theta,t)}{p(y|t)}$. In this expression, $p(\theta)$ is the value of $p(\theta)$ prior to the measurement, $p(y \mid \theta,t)$ is computed using formula A with the $y$ value measured in operation 240, with the $\theta$ parameters value of the intersection, and with the current idling time $t$, whereas $p(y \mid t)$ is determined as the sum of all the values $p(\theta)p(y \mid \theta,t)$.

In some embodiments, function Upd() may further determine if most of the information is stored in a subpart of the theta grid, in which case it may refine the theta grid by zooming on it (e.g. keeping at least 99.99% of the probability density function by resampling the $\theta$ parameters). Once the Bayesian update has been performed, a function End() can determine in an operation 270 whether the method has reached its end and the characteristic bit-flip time features have been determined for the tested circuit.

This can be done in various ways, such as thresholding the ratio $\sigma_{\Gamma_z}/\Gamma_z$ (for instance when it is below 20% or below 10%), with $\sigma_{\Gamma_z}$ being the standard deviation of $\Gamma_z$. As an alternative, a limit can be set on the total measurement time, or on the total number of loops, and in each case the value $\sigma_{\Gamma_z}/\Gamma_z$ can be returned in order to provide a quality assessment of the result.

In this function, the $\Gamma_z$ value can be determined, for each sample value of $\Gamma_z$ in the theta grid, by summing the products of $\Gamma_z * p(\theta)$ where $p(\theta)$ is the value of the intersections of all the $\theta$ parameters which share the same sample value of $\Gamma_z$. As a formula, this can be summed up as $\Gamma_z = \Sigma_{\Gamma_i} \Gamma_i * p(\theta|\Gamma_i)$ where $\Gamma_i$ are all of the sample value of $\Gamma_z$ in the theta grid, and $p(\theta|\Gamma_i)$ is the sum of all the intersections in the theta grid which have $\Gamma_i$ as a coordinate for $\Gamma_z$. $\sigma_{\Gamma_z}$ can be determined conventionally based on the $\Gamma_z$ distribution.

If the result of function End() in operation 270 indicates that the end of the function has not been reached, the most favorable idling time $t$ to explore for the next loop is determined in operations 280 and 290.

In operation 280, a function $EIG_{\Gamma_z}()$ uses the updated theta grid to compute the estimated information gain for $\Gamma_z$ for each intersection of the measurement grid, i.e. for each possible outcome. The Applicant discovered that it is preferable to focus on the convergence towards the value of $\Gamma z$ to optimize the time spent. Indeed, the Applicant discovered that the initial contrast $C_0$ can be fairly well assessed from the first measurements, and the final contrast $C_{end}$ can often be set to 0 and is also easy to assess while refining $\Gamma_z$.

The function $EIG_{\Gamma_z}()$ calculates the estimated information gain for the probability distribution function of $\Gamma_z$ by applying the updated theta grid on each combination in the measurement grid, and by selectively integrating to return to $\Gamma_z$ only.

From a principle perspective, this is done by considering the information gain in $\Gamma_z$, which is defined as the reduction in Shannon entropy between the prior and posterior marginal distributions InfoGain$_{\Gamma_z}(y,t)$: = H[$p(\Gamma_z)$] - H[$p(\Gamma_z \mid y,t)$], where $p(\Gamma_z)$ denotes the probability distribution function of $\Gamma_z$, $p(\Gamma_z \mid y,t)$ denote the conditional probability distribution function of $\Gamma_z$, knowing $y, t$.

However, since the measurement outcome is a random variable, the expected information gain (EIG) for $\Gamma_z$ is used. This is computed using the marginal distribution of possible outcomes $p(y \mid t) = \mathbb{E}_{p(\theta)}[p(y \mid \theta, t)]$. This is

obtained as follows: $\mathrm{EIG}_{\Gamma_z}(t) = \mathbb{E}_{p(y|\theta,t)}\big[\mathrm{InfoGain}_{\Gamma_z}(y,t)\big] = \mathbb{E}_{p(\Gamma_z)p(y|\Gamma_z,t)}\Big[\log\frac{p(y|\Gamma_z,t)}{p(y|t)}\Big]$ .

By further searching, the Applicant has discovered that, since larger values of $t$ lead to longer experiment durations, it is even more advantageous to maximize the information flow, defined as InfoFlow($y$, $t$) = InfoGain($y$, $t$)/$t$, which is measured in bits per second. In view of the above, this translates to the expected information flow defined as $\mathrm{EIF}_{\Gamma_z}(t) =$

$$\mathbb{E}_{p(y|\theta,t)}\big[\mathrm{InfoFlow}_{\Gamma_z}(y,t)\big] = \frac{1}{t}\mathbb{E}_{p(\Gamma_z)p(y|\Gamma_z,t)}\Big[\log\frac{p(y|\Gamma_z,t)}{p(y|t)}\Big] .$$

As a result, the function $\mathrm{EIG}_{\Gamma_z}(t)$ of operation 280 can be advantageously replaced by the function $\mathrm{EIF}_{\Gamma_z}(t)$.

Operation 280 allows to determine a plurality of $\mathrm{EIG}_{\Gamma_z}(t)$ or $\mathrm{EIF}_{\Gamma_z}(t)$ values, more precisely one for each sample of t in the measurement grid.

The idling time which provides the most information (whether information gain or information flow is used), can be determined in an operation 290 by determining the value of t which maximizes the values of operation 280. Incidentally, one can see that the use of information flow can also be achieved by optimizing $\mathrm{EIG}_{\Gamma_z}(t)/t$ in operation 290, instead of optimizing $\mathrm{EIG}_{\Gamma_z}(t)$.

The computation of the $\mathrm{EIG}_{\Gamma_z}(t)$ values can be performed by the following operations:

- Using the updated theta grid.
- For each $y$, $t$ on the measurement grid:

   ○ For all model parameters $\theta$ in the theta grid, compute the probability of measurement outcome $y$ at time $t$: $p(y|\theta, t)$ using formula A
   ○ Compute the probability $p(y|t)$ of measuring $y$ at time $t$, as the integral of $p(\theta) * p(y|\theta, t)$ (i.e. the sum of all $p(\theta) * p(y|\theta, t)$))
   ○ Compute the marginal probability $p(y|\Gamma_z,t)$ by integrating over the other model parameters (i.e. by summing all $p(\theta) * p(y|\theta, t)$, but only for the $\theta$ parameters which are different from $\Gamma_z$)
   ○ Compute $\mathrm{EIG}_{\Gamma_z}(y,t)$ as the sum for all $\Gamma_z$ values of $p(y|\Gamma_z,t) * p(\Gamma_z) * log(p(y|\Gamma_z,t)/p(y|t))$

- For each $t$ on the measurement grid, determine $\mathrm{EIG}_{\Gamma_z}(t)$ as the sum for all $y$ on the measurement grid of $\mathrm{EIG}_{\Gamma_z}(y,t)$.

As explained above, if $\mathrm{EIF}_{\Gamma_z}$ is used, divide the quantity by the measurement time, and select the time maximizing the quantity in operation 290, else just select the time maximizing the quantity in operation 290.

Here, one can see that operations 280 and 290 could be a single operation, with the function $\mathrm{EIG}_{\Gamma_z}()$ or $\mathrm{EIF}_{\Gamma_z}()$ of operation 280 directly returning the time t associated with the largest value.

Figure 3 shows a plot of the expected information flow (EIF) for the $\Gamma_z$ distribution versus the measurement time t.

After operation 290, the loop resumes with operation 210.

If End() of operation 270 returns a positive value, then the measurement value of $\Gamma_z$ determined in operation 270 is returned in an operation 299, optionally with an indicator of the measurement quality as described above. The values of $C_0$ and of $C_{end}$ may be determined similarly to that of $\Gamma_z$ in operation 270 and be also returned.

The Applicant's validations have shown that, when comparing the results of the Bayesian adaptive method to those from the fixed-time approach, where measurement times are predetermined, the estimated bit-flip times fall within the one-sigma interval uncertainty interval in both cases.

The Applicant also compared the method of the invention to trajectory-based measurements to assess its validity for bit-flips times longer than a few tens of seconds. Trajectories are obtained by applying a continuous drive to the memory, orthogonal to the cat qubit axis, and measuring the output field of the buffer, as described for instance in the article by Réglade, Ulysse, et al. "Quantum control of a cat qubit with bit-flip times exceeding ten seconds", Nature (2024): 1-6. The phase of the drive relative to the cat axis must be carefully calibrated to avoid transferring population between the cat basis states. However, even with perfect phase calibration, excessive drive amplitude can still induce bit-flips. The estimated bit-flip times obtained using the adaptive method are consistent with those from the trajectory method, demonstrating the robustness of the adaptive approach.

Finally, when comparing the method time to the optimal time possible, the Applicant found that the measurement duration of the adaptive method approaches the optimal limit as the bit-flip time increases, particularly beyond 100 seconds.

Figure 4 shows a generic diagram of a system for carrying out the above described method. System 40 comprises a housing portion 42 and a processing portion 44.

Housing portion 42 is arranged to receive a superconducting quantum circuit for which the quantum bit characteristics time is sought. Processing portion 44 is arranged to perform the method as described above.

The processing portion 44 may comprise any suitable means *e.g.* a command circuit for preparing the physical qubit in the chosen state, or any other means for obtaining the bit-flip measurements, and for carrying out the calculus steps of the method, *e.g.* determining the EIG or EIF, performing the Bayesian update, determining the next measurement time and the results.

**Claims**

1. Method for determining a characteristic bit-flip time of a quantum qubit in a superconducting quantum device, comprising the following operations:

   a) initializing an idling time and a probability density function (p) of bit-flip time testing parameters ($\theta$) according to a first probability distribution, said bit-flip testing time parameters ($\theta$) comprising at least a decreasing lifetime rate ($\Gamma_Z$) said probability density function (p) of bit-flip time testing parameters ($\theta$) being a Poisson distribution with the probability of observing a total measurement outcome $y = \Sigma_i\, y_i$ being given by $P(y =$

   $$k \mid \theta, t, 0/1) = \binom{N}{k} p_{0/1}^{k} \left(1 - p_{0/1}\right)^{N-k}$$ , where $p_{0/1}$ is a function comprising a component of the type $e^{-\Gamma_Z t}$, said probability density function of bit-flip time testing parameters ($\theta$) being stored on a grid of values for the bit-flip time testing parameters ($\theta$),

   b) preparing a physical qubit in a chosen state,
   c) idling for a duration derived from the idling time,
   d) obtaining a bit-flip measurement ($y$) by reading the state of the physical qubit,
   e) updating the probability distribution function of bit-flip time testing parameters ($p(\theta)$) using the measurement ($y$) of operation d), the idling time of operation c), and with the formula $p(\theta) = p(\theta)p(y|\theta,t)/p(y,t)$,
   f) calculating an estimated information gain for each possible measurement time using the updated probability distribution function of bit-flip time testing parameters ($p(\theta)$) of operation e), from the information gain equal to the difference between the Shannon entropy of the probability distribution function of the decreasing lifetime rate ($p(\Gamma_Z)$) and the Shannon entropy of the conditional probability distribution function of the decreasing lifetime rate knowing the measurement of operation d) and the idling time ($p(\Gamma_Z|(y,t))$, or an estimated information flow with the information flow which is a function of the information gain and the idling time,
   g) defining a new idling time as the value of time which maximizes the estimated information gain or the estimated information flow of operation f),
   h) Returning the bit-flip testing time parameters ($\theta$) if p($\theta$) satisfies a return condition derived from the evolution of the decreasing lifetime rate ($\Gamma_Z$), and/or comparison with a return threshold, and else repeating steps b) to g) with the idling time of operation g) and the probability distribution function (p) of bit-flip time testing parameters ($\theta$) of operation e).

2. Method according to claim 1, in which said $p_{0/1}$ function is defined as $p_{0/1} = (1 + C_{end} + (C_{end} \pm C_0)e^{-\Gamma_Z t})/2$, with the "$\pm$" varying depending on the chosen state of operation b) and on the measurement carried out in operation d), and with $C_0$ being an initial contrast parameter and $C_{end}$ being a final contrast parameter which are both part of the bit-flip time testing parameters ($\theta$).

3. Method according to claim 1 or 2, in which the information flow is calculated as the ratio of the information gain and a non-decreasing function of time.

4. Method according to one of the preceding claims, in which the variable $i$ is comprised between [2;N], with N being greater than 2, and in which for each idling time, operations b) to d) are repeated a number N of times to obtain the bit-flip measurement.

5. Method according to one of the preceding claims, in which operation a) comprises repeating operations b) to d) with an idling time equal to a minimum idling time.

6. Method according to one of the preceding claims, in which the final contrast ($C_{end}$7. is set to 0.

7. System for determining a characteristic bit-flip time of a quantum qubit in a superconducting quantum device, comprising a housing portion arranged to receive a superconducting quantum device, and a processing element arranged to perform the method of one of claims 1 to 6 on a superconducting quantum device received in said housing portion.

8. Computer program product comprising instructions which cause the system of claim 7 to carry out the operations of the method of one of claims 1 to 6.

FIG. 1

FIG. 3

FIG. 4

FIG. 2

## EUROPEAN SEARCH REPORT

Application Number

EP 24 30 7261

### DOCUMENTS CONSIDERED TO BE RELEVANT

| Category | Citation of document with indication, where appropriate, of relevant passages | Relevant to claim |
|---|---|---|
| A | US 2023/053543 A1 (FINCK AARON [US] ET AL) 23 February 2023 (2023-02-23) * paragraph [0036] * * paragraph [0082] - paragraph [0094] * * figures 6-8 * ----- | 1-8 |

**CLASSIFICATION OF THE APPLICATION (IPC)**

INV.
G06N10/20
G06N10/70

**TECHNICAL FIELDS SEARCHED (IPC)**

G06N

The present search report has been drawn up for all claims

| Place of search | Date of completion of the search | Examiner |
|---|---|---|
| The Hague | 6 August 2025 | Baldan, Marco |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 30 7261

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2025

| Patent document cited in search report | Publication date | Patent family member(s) | Publication date |
|---|---|---|---|
| US 2023053543 A1 | 23-02-2023 | US 2023053543 A1 | 23-02-2023 |
| | | WO 2023025696 A1 | 02-03-2023 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 23175147

### Non-patent literature cited in the description

- Parameters estimation by fitting correlation functions of continuous quantum measurement. *arXiv:2410.11955*, 2024
- **RAINFORTH, TOM et al.** Modern Bayesian experimental design. *Statistical Science*, 2024, vol. 39 (1), 100-114
- **POP et al.** Coherent suppression of electromagnetic dissipation due to superconducting quasiparticles. *Nature*, 2014, vol. 508, 369-372
- **R. LESCANNE.** Exponential suppression of bit-flips in a qubit encoded in an oscillator. *Nature Physics*, 2020
- **LESCANNE.** Exponential suppression of bit-flips in a qubit encoded in an oscillator. *arXiv:1907.11729v1*, 26 July 2019
- **RÉGLADE, ULYSSE et al.** Quantum control of a cat qubit with bit-flip times exceeding ten seconds. *Nature*, 2024, 1-6